# EUROPEAN PATENT APPLICATION

(11) **EP 3 647 339 A1**
(43) Date of publication of application: **06.05.2020**
(21) Application number: 19202944.5
(22) Date of filing: 14.10.2019
(51) Int. Cl.: C08G 65/30, C08G 65/38, C08G 65/44, C08G 65/46

(54) **METHOD OF MAKING A POLY(PHENYLENE ETHER) AND POLY(PHENYLENE ETHER) PREPARED THEREBY**

(30) Priority: 30.10.2018 EP 18203546
(71) Applicant: SABIC Global Technologies B.V., 4612 PX Bergen op Zoom (NL)
(72) Inventor: GHANTA, Madhav, Selkirk, New York 12158 (US)
(74) Representative: Balder IP Law, S.L.

(57) **Abstract**

A method of making a poly(phenylene ether) includes oxidatively polymerizing a combination of a phenolic monomer and a monofunctional phenylene ether oligomer in the presence of an organic solvent and a copper-amine catalyst. The method further includes terminating the oxidative polymerization to form a post-termination reaction mixture; combining an aqueous solution comprising a chelant with the post-termination reaction mixture to form a chelation mixture including an aqueous phase having chelated copper ion, and an organic phase having dissolved poly(phenylene ether); separating the aqueous phase and the organic phase; and isolating the poly(phenylene ether) from the organic phase.

## Description

### BACKGROUND

Poly(phenylene ether) is known for its excellent water resistance, dimensional stability, and inherent flame retardancy, as well as high oxygen permeability and oxygen/nitrogen selectivity. Properties such as strength, stiffness, chemical resistance, and heat resistance can be tailored by blending with various other polymers to meet the requirements of a wide variety of consumer products, for example, plumbing fixtures, electrical boxes, automotive parts, and insulation for wire and cable. A commercially relevant poly(phenylene ether) is poly(2,6-dimethyl-1,4-phenylene ether), which is prepared on a large scale by the oxidative polymerization of 2,6-dimethylphenol (also known as 2,6-xylenol).

There remains a need for an improved process for producing poly(phenylene ether)s. It would be particularly advantageous if such a process utilized low molecular weight poly(phenylene ether) (i.e., phenylene ether oligomer) as a starting material in combination with phenolic monomers. It would be further advantageous for the process to be altered minimally when a low molecular weight poly(phenylene ether) is incorporated as starting material relative to processes starting entirely from phenolic monomers.

### SUMMARY

A method of making a poly(phenylene ether) comprises oxidatively polymerizing a combination comprising, based on the total weight of the combination, 90 to 99.5 weight percent of a phenolic monomer; and 0.5 to 10 weight percent of a monofunctional phenylene ether oligomer having an intrinsic viscosity of less than 0.2 deciliters per gram, preferably 0.10 to 0.15 deciliters per gram, more preferably 0.12 to 0.13 deciliters per gram, determined at 25°C in chloroform by Ubbelohde viscometer; in the presence of an organic solvent and a copper-amine catalyst; terminating the oxidative polymerization to form a post-termination reaction mixture; combining an aqueous solution comprising a chelant with the post-termination reaction mixture to form a chelation mixture comprising an aqueous phase comprising chelated copper ion, and an organic phase comprising dissolved poly(phenylene ether); separating the aqueous phase and the organic phase; and isolating the poly(phenylene ether) from the organic phase.

A poly(phenylene ether) made by the above method and an article comprising the poly(phenylene ether) are also described.

The above described and other features are exemplified by the following figures and detailed description.

### BRIEF DESCRIPTION OF THE DRAWINGS

The following figures represent exemplary aspects.
FIG. 1 shows an increase in intrinsic viscosity over time (A) and the intrinsic viscosity of each example after equilibration (B).
FIG. 2 shows variation in the pump flow through the end-point monitor for different phenylene ether oligomer loading in the reactor.
FIG. 3 shows variation in the polymer solution temperature for a fixed temperature ramp profile for batches with different phenylene ether oligomer loading in the reactor.
FIG. 4 shows (A) weight average molecular weight of samples collected during reaction, and (B) weight average molecular weight of samples measured after equilibration.
FIG. 5 shows (A) polydispersity of samples collected during reaction, and (B) polydispersity of samples measured after equilibration.
FIG. 6 shows gel permeation chromatography traces of sample collected at 80 minutes during reaction (A) and after equilibration of the 80-minute sample (B).
FIG. 7 shows gel permeation chromatography traces of sample collected at the end of the reaction (A) and after equilibration of the of the final sample (B).
FIG. 8 shows concentration of the TMDQ byproduct formed during the reaction for the examples, as determined by proton nuclear magnetic resonance spectroscopy.
FIG. 9 shows the concentration of total bound amines for the samples collected during reaction (A) and the concentration of total bound amines for the samples measured after equilibration (B).

### DETAILED DESCRIPTION

The present inventor has unexpectedly discovered a process for preparing poly(phenylene ether) in which a portion of the phenolic monomer is replaced with a monofunctional phenylene ether oligomer. Advantageously, when the phenylene ether oligomer is used in a particular amount, changes to the overall process conditions are not needed to provide the desired poly(phenylene ether).

Accordingly, an aspect of the present disclosure is a method of making a poly(phenylene ether). The method comprises oxidatively polymerizing a combination comprising a phenolic monomer and a monofunctional phenylene ether oligomer in the presence of an organic solvent and a copper-amine catalyst; terminating the oxidative polymerization to form a post-termination reaction mixture; combining an aqueous solution comprising a chelant with the post-termination reaction mixture to form a chelation mixture comprising an aqueous phase comprising chelated copper ion, and an organic phase comprising dissolved poly(phenylene ether); separating the aqueous phase and the organic phase; and isolating the poly(phenylene ether) from the organic phase.

The combination of the phenolic monomer and the monofunctional phenylene ether oligomer comprises, based on the total weight of the composition, 90 to 99.5 weight percent of the phenolic monomer and 0.5 to 10 weight percent of the monofunctional phenylene ether oligomer. Within these ranges, the phenolic monomer can be present in an amount of 90 to 99 weight percent, or 90 to 97 weight percent, or 90 to 95 weight percent. The monofunctional phenylene ether oligomer can be present in an amount of 0.5 to less than 10 weight percent, or 1 to 10 weight percent, or 1 to less than 10 weight percent, or 3 to 10 weight percent, or 3 to less than 10 weight percent, or 5 to 10 weight percent, or 5 to less than 10 weight percent. The present inventor has unexpectedly identified this particular range of monofunctional phenylene ether oligomer as advantageously allowing for the process to be conducted with essentially no change in process conditions compared to when a process based only on phenolic monomers is used. As further described in the working examples below, when 10 weight percent of the monofunctional phenylene ether oligomer is used, the reaction mixture approaches a gelled state. Without wishing to be bound by theory, it is believed that concentrations of greater than 10 weight percent would lead to fast gel formation, resulting in the need to restructure the process to accommodate such oligomer loading. Thus, an advantageous feature of the present process (i.e., when up to and including 10 weight percent of the oligomer is used), no changes to the overall process conditions are needed to provide the desired poly(phenylene ether) product.

The phenolic monomer can be a monohydric phenol having the structure 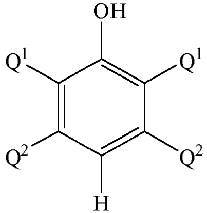 wherein each occurrence of Q¹ is independently halogen, unsubstituted or substituted C₁₋₁₂ primary or secondary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms; and wherein each occurrence of Q² is independently hydrogen, halogen, unsubstituted or substituted C₁₋₁₂ primary or secondary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms. In an aspect, each occurrence of Q¹ is methyl and each occurrence of Q² is hydrogen and the phenol is 2,6-xylenol (also referred to as dimethyl phenol).

The monofunctional phenylene ether oligomer comprises repeating units of the formula 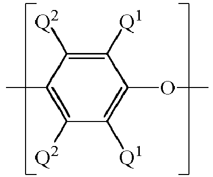 wherein Q¹ and Q² can be as described above. In an aspect, the phenylene ether oligomer comprises repeating units derived from 2,6-dimethylphenol. The phenylene ether oligomer is monofunctional, and thus comprises one phenolic end group per molecule.

The monofunctional phenylene ether oligomer has an intrinsic viscosity of less than 0.2 deciliters per gram, preferably 0.10 to 0.15 deciliters per gram, more preferably 0.12 to 0.13 deciliters per gram. Intrinsic viscosity can be determined at 25°C in chloroform by Ubbelohde viscometer.

The monofunctional phenylene ether oligomer can also advantageously comprise less than 100 parts per million (ppm) of incorporated amine groups. Incorporated amine groups can be detected, for example, using nuclear magnetic resonance (NMR) spectroscopy, as further described in the working examples below.

The oxidative polymerization is conducted in the presence of an organic solvent. Suitable organic solvents can include alcohols, ketones, aliphatic and aromatic hydrocarbons, chlorohydrocarbons, nitrohydrocarbons, ethers, esters, amides, mixed ether-esters, sulfoxides, and the like, provided they do not interfere with or enter into the oxidation reaction. High molecular weight poly(phenylene ethers) can greatly increase the viscosity of the reaction mixture. Therefore, it is sometimes desirable to use a solvent system that will cause them to precipitate while permitting the lower molecular weight polymers to remain in solution until they form the higher molecular weight polymers. The organic solvent can comprise, for example, toluene, benzene, chlorobenzene, ortho-dichlorobenzene, nitrobenzene, trichloroethylene, ethylene dichloride, dichloromethane, chloroform, or a combination thereof. Preferred solvents include aromatic hydrocarbons. In an aspect, the organic solvent comprises toluene, benzene, chlorobenzene, or a combination thereof, preferably toluene.

The combination of the monohydric phenol and the monofunctional phenylene ether oligomer can be present in the oxidative polymerization reaction mixture in an amount of 5 to 40 weight percent, or 10 to 35 weight percent, or 20 to 30 weight percent, based on the total weight of the combination of the monohydric phenol and the monofunctional phenylene ether oligomer and the solvent.

The oxidative polymerization is further conducted in the presence of a copper-amine catalyst. The copper source for the copper amine catalyst can comprise a salt of cupric or cuprous ion, including halides, oxides, and carbonates. Alternatively, copper can be provided in the form of a pre-formed salt of an alkylene diamine ligand. Preferred copper salts include cuprous halides, cupric halides, and their combinations. Especially preferred are cuprous bromides, cupric bromides, and combinations thereof.

A preferred copper-amine catalyst comprises a secondary alkylene diamine ligand. Suitable secondary alkylene diamine ligands are described in U.S. Pat. No. 4,028,341 to Hay and are represented by the formula

R^{b}-NH-R^{a}-NH-R^{c}

wherein R^{a} is a substituted or unsubstituted divalent residue wherein two or three aliphatic carbon atoms form the closest link between the two diamine nitrogen atoms; and R^{b} and R^{c} are each independently isopropyl or a substituted or unsubstituted C₄₋₈ tertiary alkyl group. Examples of R^{a} include ethylene, 1,2-propylene, 1,3-propylene, 1,2-butylene, 1,3-butylene, 2,3-butylene, the various pentylene isomers having from two to three carbon atoms separating the two free valances, phenylethylene, tolylethylene, 2-phenyl-1,2-propylene, cyclohexylethylene, 1,2-cyclohexylene, 1,3-cyclohexylene, 1,2-cyclopropylene, 1,2-cyclobutylene, 1,2-cyclopentylene, and the like. Preferably, R^{a} is ethylene. Examples of R^{b} and R^{c} can include isopropyl, t-butyl, 2-methyl-but-2-yl, 2-methyl-pent-2-yl, 3-methyl-pent-3-yl, 2,3-dimethyl-but-2-yl, 2,3-dimethylpent-2-yl, 2,4-dimethyl-pent-2-yl, 1-methylcyclopentyl, 1-methylcyclohexyl and the like. A highly preferred example of R^{b} and R^{c} is t-butyl. An exemplary secondary alkylene diamine ligand is N,N'-di-t-butylethylenediamine (DBEDA). Suitable molar ratios of copper to secondary alkylene diamine are from 1:1 to 1:5, preferably 1:1 to 1:3, more preferably 1:1.5 to 1:2.

The preferred copper-amine catalyst comprising a secondary alkylene diamine ligand can further comprise a secondary monoamine. Suitable secondary monoamine ligands are described in commonly assigned U.S. Pat. No. 4,092,294 to Bennett et al. and represented by the formula

R^{d}-NH-R^{e}

wherein R^{d} and R^{e} are each independently substituted or unsubstituted C₁₋₁₂ alkyl groups, and preferably substituted or unsubstituted C₃₋₆ alkyl groups. Examples of the secondary monoamine include di-n-propylamine, di-isopropylamine, di-n-butylamine, di-sec-butylamine, di-t-butylamine, N-isopropyl-t-butylamine, N-sec-butyl-t-butylamine, di-n-pentylamine, bis(1,1-dimethylpropyl)amine, and the like. A highly preferred secondary monoamine is di-n-butylamine (DBA). A suitable molar ratio of copper to secondary monoamine is from 1:1 to 1:10, preferably 1:3 to 1: 8, and more preferably 1:4 to 1:7.

The preferred copper-amine catalyst comprising a secondary alkylene diamine ligand can further comprise a tertiary monoamine. Suitable tertiary monoamine ligands are described in the abovementioned Hay U.S. Pat. No. 4,028,341 and Bennett U.S. Pat. No. 4,092,294 patents and include heterocyclic amines and certain trialkyl amines characterized by having the amine nitrogen attached to at least two groups which have a small cross-sectional area. In the case of trialkylamines, it is preferred that at least two of the alkyl groups be methyl with the third being a primary C₁₋₈ alkyl group or a secondary C₃₋₈ alkyl group. It is especially preferred that the third substituent have no more than four carbon atoms. A highly preferred tertiary amine is dimethylbutylamine (DMBA). A suitable molar ratio of copper to tertiary amine is less than 1:20, preferably less than 1:15, preferably 1:1 to less than 1:15, more preferably 1:1 to 1:12.

A suitable molar ratio of copper-amine catalyst (measured as moles of metal) to poly(phenylene ether) oligomer starting material is 1:50 to 1:400, preferably 1:100 to 1:200, more preferably 1:100 to 1:180.

The reaction conducted in the presence of a copper-amine catalyst can optionally be conducted in the presence of bromide ion. It has already been mentioned that bromide ion can be supplied as a cuprous bromide or cupric bromide salt. Bromide ion can also be supplied by addition of a 4-bromophenol, such as 2,6-dimethyl-4-bromophenol. Additional bromide ion can be supplied in the form of hydrobromic acid, an alkali metal bromide, or an alkaline earth metal bromide. Sodium bromide and hydrobromic acid are highly preferred bromide sources. A suitable ratio of bromide ion to copper ion is 2 to 20, preferably 3 to 20, more preferably 4 to 7.

In an aspect, each of the above described components of the copper-amine catalyst are added to the oxidative polymerization reaction at the same time.

The oxidative polymerization can optionally further be conducted in the presence of one or more additional components, including a lower alkanol or glycol, a small amount of water, or a phase transfer agent. It is generally not necessary to remove reaction byproduct water during the reaction.

In an aspect, the monofunctional phenylene ether oligomer can comprise up to 50 weight percent water, based on the weight of the oligomer and the water, or 20 to 50 weight percent, or 25 to 50 weight percent, or 10 to 30 weight percent. Thus, the introduction of the oligomer into the oxidative polymerization can lead to additional moisture being introduced into the process compared to the same process using only monohydric phenolic monomers, as further discussed in the examples below. Advantageously, substantially no catalyst deactivation occurs due to the presence of the additional water. Water is a byproduct of the oxidative polymerization reaction and based on stoichiometric estimations approximately 3 wt.% of the batch weight at the end of the reaction is water. It will be further understood that when the monofunctional polyphenylene ether oligomer comprises water, the amount can be adjusted such that the desired amount of phenylene ether is added to the polymerization, accounting for the additional weight of the water. For example, if 5 wt% phenylene ether oligomer is desired in the polymerization, and the oligomer comprises 30 wt% water, the amount of the phenylene ether oligomer composition (i.e., the phenylene ether oligomer and the water) can be increased in order to provide 5 wt% of the phenylene ether oligomer in the polymerization reaction mixture. Alternatively, in an aspect, the phenylene ether oligomer can be dried prior to use, and is essentially free of water.

In an aspect, a phase transfer agent is present. Suitable phase transfer agents can include, for example, a quaternary ammonium compound, a quaternary phosphonium compound, a tertiary sulfonium compound, or a combination thereof. Preferably, the phase transfer agent can be of the formula (R³)₄Q⁺X, wherein each R³ is the same or different, and is a C₁₋₁₀ alkyl; Q is a nitrogen or phosphorus atom; and X is a halogen atom or a C₁₋₈ alkoxy or C₆₋₁₈ aryloxy. Exemplary phase transfer catalysts include (CH₃(CH₂)₃)₄NX, (CH₃(CH₂)₃)₄PX, (CH₃(CH₂)₅)₄NX, (CH₃(CH₂)₆)₄NX, (CH₃(CH₂)₄)₄NX, CH₃(CH₃(CH₂)₃)₃NX, and CH₃(CH₃(CH₂)₂)₃NX, wherein X is Cl⁻, Br⁻, a C₁₋₈ alkoxy or a C₆₋₁₈ aryloxy. An effective amount of a phase transfer agent can be 0.1 to 10 wt%, or 0.5 to 2 wt%, each based on the weight of the reaction mixture. In an aspect, a phase transfer agent is present and comprises *N*,*N*,*N*'*N*'-didecyldimethyl ammonium chloride.

In an aspect, the oxidative polymerization includes initiating the oxidative polymerization in the presence of the monofunctional phenylene ether oligomer and no more than 10 weight percent of the phenolic monomer. In an aspect, the remainder of the phenolic monomer can be added to the oxidative polymerization reaction mixture following initiation, preferably over the course of at least 40 minutes.

The oxidative polymerization can be conducted at a temperature of 20 to 70°C, preferably 30 to 60°C, more preferably 45 to 55°C. Depending on the precise reaction conditions chosen, the total polymerization reaction time-that is, the time elapsed between initiating oxidative polymerization and terminating oxidative polymerization-can vary, but it is typically 100 to 250 minutes, specifically 145 to 210 minutes.

The method further comprises terminating the oxidative polymerization to form a post-termination reaction mixture. The reaction is terminated when the flow of oxygen to the reaction vessel is stopped. Residual oxygen in the reaction vessel headspace is removed by flushing with an oxygen-free gas, such as nitrogen.

After the polymerization reaction is terminated, the copper ion of the polymerization catalyst is separated from the reaction mixture. This is accomplished by combining a chelant with the post-termination reaction mixture to form a chelation mixture. The chelant comprises an alkali metal salt of an aminopolycarboxylic acid, preferably an alkali metal salt of an aminoacetic acid, more preferably an alkali metal salt of nitrilotriacetic acid, ethylene diamine tetraacetic acid, or a combination thereof, even more preferably a sodium salt of nitrilotriacetic, a sodium salt of ethylene diamine tetraacetic acid, or a combination thereof. In an aspect, the chelant comprises an alkali metal salt of nitrilotriacetic acid. In an aspect, the chelant is a sodium or potassium salt of nitrilotriacetic acid, specifically trisodium nitrilotriacetate. After agitation of the chelation mixture, that mixture comprises an aqueous phase comprising chelated copper ion and an organic phase comprising the dissolved poly(phenylene ether). The chelation mixture can exclude the dihydric phenol required by U.S. Pat. No. 4,110.311 to Cooper et al., the aromatic amine required by U.S. Pat. No. 4,116,939 to Cooper et al., and the mild reducing agents of U.S. Pat. No. 4,110.311 to Cooper et al., which include sulfur dioxide, sulfurous acid, sodium bisulfite, sodium thionite, tin(II) chloride, iron (II) sulfate, chromium (II) sulfate, titanium (III) chloride, hydroxylamines and salts thereof, phosphates, glucose, and mixtures thereof. The chelation mixture is maintained at a temperature of 40 to 55°C, specifically 45 to 50°C, for 5 to 100 minutes, specifically 10 to 60 minutes, more specifically 15 to 30 minutes. This combination of temperature and time is effective for copper sequestration while also minimizing molecular weight degradation of the poly(phenylene ether). The chelation step includes (and concludes with) separating the aqueous phase and the organic phase of the chelation mixture. This separation step is conducted at a temperature of 40 to 55°C, specifically 45 to 50°C. The time interval of 5 to 100 minutes for maintaining the chelation mixture at 40-55°C is measured from the time at which the post-termination reaction mixture is first combined with chelant to the time at which separation of the aqueous and organic phases is complete.

The method further comprises isolating the poly(phenylene ether) from the organic phase. Isolation can be by, for example, precipitation of the poly(phenylene ether) which can be induced by appropriate selection of reaction solvent described above, or by the addition of an anti-solvent to the reaction mixture. Suitable anti-solvents include lower alkanols having one to about ten carbon atoms, acetone, and hexane. The preferred anti-solvent is methanol. The anti-solvent can be employed at a range of concentrations relative to the organic solvent, with the optimum concentration depending on the identities of the organic solvent and anti-solvent, as well as the concentration and intrinsic viscosity of the poly(phenylene ether) product. When the organic solvent is toluene and the anti-solvent is methanol, a toluene:methanol weight ratio of 50:50 to 80:20 is suitable, with ratios of 60:40 to 70:30 being preferred, and 63:37 to 67:33 being more preferred. These preferred and more preferred ratios are useful for producing a desirable powder morphology for the isolated poly(phenylene ether) resin, without generating either stringy powder or excessive powder fines.

An important advantage of the method described herein is that it produces an isolated poly(phenylene ether) having an intrinsic viscosity of greater than 0.20 deciliter per gram, preferably 0.25 to 0.60 deciliter per gram, or 0.3 to 0.6 deciliter per gram, or 0.4 to 0.6 deciliter per gram, determined at 25°C in chloroform by Ubbelohde viscometer. In an aspect, the isolated poly(phenylene ether) has a monomodal molecular weight distribution as determined by gel permeation chromatography. In an aspect, the isolated poly(phenylene ether) has a dispersity of 1.7 to 3.9, or 2.2 to 3.8, or 2.5 to 3.7, as determined by gel permeation chromatography. In an aspect, the isolated poly(phenylene ether) comprises less than 1 weight percent, or less than 0.7 weight percent tetramethyldiphenoquinone (TMDQ) end groups.

In a specific aspect of the method, the phenolic monomer comprises 2,6-dimethylphenol; the organic solvent comprises toluene, benzene, chlorobenzene, or a combination thereof; the monofunctional phenylene ether oligomer has an intrinsic viscosity of 0.10 to 0.15 deciliters per gram, determined at 25°C in chloroform by Ubbelohde viscometer; the copper-amine catalyst comprises a copper ion and a hindered secondary amine of the formula R_{b}HN-Rₐ-NHR_{c}, wherein Rₐ is C₂₋₄ alkylene or C₃₋₇ cycloalkylene and R_{b} and R_{c} are isopropyl or C₄₋₈ tertiary alkyl wherein only the α-carbon atom has no hydrogens, there being at least two and no more than three carbon atoms separating the two nitrogen atoms; the chelant comprises an alkali metal salt of an aminopolycarboxylic acid; the oxidative polymerization is in the presence of a secondary monoamine, a tertiary monoamine, or a combination thereof, and a phase transfer agent wherein the phase transfer agent comprises a quaternary ammonium compound, a quaternary phosphonium compound, a tertiary sulfonium compound, or a combination thereof; and initiating oxidative polymerization is in the presence of the mono functional phenylene ether oligomer and no more than 10 weight percent of the phenolic monomer, wherein the remainder of the phenolic monomer is added to the mixture after initiation, preferably over the course of at least 40 minutes. The phenylene ether oligomer made by this aspect can have less than 100 parts per million of incorporated amine groups.

In the foregoing aspect, the hindered secondary amine can be di-*tert-*butylethylenediamine, the secondary monoamine can be di-*n*-butylamine, the tertiary monoamine can be *N,N*-dimethylbutylamine, and the phase transfer agent can be *N,N,N'N'-*didecyldimethyl ammonium chloride.

A poly(phenylene ether) prepared according to the above described method represents another aspect of the present disclosure. The poly(phenylene ether) can comprise repeating structural units having the formula 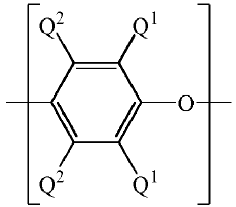 wherein Q¹ and Q² are as defined above. The hydrocarbyl residue can also contain one or more carbonyl groups, amino groups, hydroxyl groups, or the like, or it can contain heteroatoms within the backbone of the hydrocarbyl residue. As one example, Q¹ can be a di-n-butylaminomethyl group formed by reaction of a terminal 3,5-dimethyl-1,4-phenyl group with the di-n-butylamine component of an oxidative polymerization catalyst.

The poly(phenylene ether) can comprise molecules having aminoalkyl-containing end group(s), typically located in a position ortho to the hydroxy group. Also frequently present are tetramethyldiphenoquinone (TMDQ) end groups, typically obtained from 2,6-dimethylphenol-containing reaction mixtures in which tetramethyldiphenoquinone by-product is present. In an aspect, the poly(phenylene ether) is substantially free of the quinone end groups. For example, the poly(phenylene ether) can include less than 1% of quinone end groups. In an aspect, the poly(phenylene ether) is a poly(2,6-dimethyl-1,4-phenylene ether).

Compositions and articles comprising the poly(phenylene ether) made by the above method represent another aspect of the present disclosure. For example, the poly(phenylene ether) made by the method described herein can be useful for forming a thermoplastic composition which can optionally comprises at least one of a thermoplastic polymer different from the poly(phenylene ether) and an additive composition comprising one or more additives. The one or more additives can be selected to achieve a desired property, with the proviso that the additive(s) are also selected so as to not significantly adversely affect a desired property of the thermoplastic composition. The additive composition or individual additives can be mixed at a suitable time during the mixing of the components for forming the composition. The additive can be soluble or non-soluble in poly(phenylene ether). The additive composition can include an impact modifier, flow modifier, filler (e.g., a particulate polytetrafluoroethylene (PTFE), glass, carbon, mineral, or metal), reinforcing agent (e.g., glass fibers), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g, a dye or pigment), surface effect additive, radiation stabilizer, flame retardant, anti-drip agent (e.g., a PTFE-encapsulated styreneacrylonitrile copolymer (TSAN)), or a combination thereof. For example, a combination of a heat stabilizer, mold release agent, and ultraviolet light stabilizer can be used. In general, the additives are used in the amounts generally known to be effective. For example, the total amount of the additive composition (other than any impact modifier, filler, or reinforcing agent) can be 0.001 to 10.0 wt%, or 0.01 to 5 wt%, each based on the total weight of the polymer in the composition.

The poly(phenylene ether) or a composition comprising the poly(phenylene ether) can be formed into articles by shaping, extruding, or molding. Articles can be molded from the composition by methods including, for example, injection molding, injection compression molding, gas assist injection molding, rotary molding, blow molding, compression molding, and the like. In an aspect, articles can be formed by injection molding.

This disclosure is further illustrated by the following examples, which are nonlimiting.

### EXAMPLES

Materials used for the following examples are described in Table 1.

**Table 1**

| Component | Description | Supplier |
|---|---|---|
| DMP | 2,6-Dimethylphenol (2,6-xylenol), CAS Reg. No. 576-26-1, 99.9% pure | ACROS Organics |
| Cu₂O | Cuprous oxide, CAS Reg. No. 1317-39- | American Chemet |
| HBr | Hydrobromic acid, CAS Reg. No. 10035-10-6; obtained as a 48 weight percent solution in water | Chemtura |
| DBEDA | *N,N*'-di-*tert*-butylethylenediamine, CAS Reg. No. 4062-60-6 | Achiewell |
| DBA | *N,N*-di-*n*-butylamine, CAS Reg. No. 111-92-2 | Tampico |
| DMBA | *N,N*-dimethylbutylamine, CAS Reg. No. 927-62-8 | Oxea |
| DDAC | *N,N,N',N*'-Didecyldimethyl ammonium chloride, CAS Reg. No. 7173-51-5 | Pilot Chemical |
| NTA | Nitrilotriacetic acid trisodium salt, CAS Reg. No. 5064-31-3 | Ascend |
| Toluene | Toluene, CAS Reg. No. 108-33-3 | ACROS Organics |
| PPE | A phenylene ether oligomer comprising repeating units derived from 2,6-dimethylphenol, having an intrinsic viscosity of 0.12 deciliter per gram and a number average molecular weight of 2,350 grams/mole | SABIC |

Gel permeation chromatography (GPC) was carried out at 25°C in chloroform, and molecular weights are reported relative to polystyrene standards. Proton nuclear magnetic resonance (¹H NMR) spectroscopy was carried out using a 600 MHZ Agilent NMR spectrometer. Sample (0.5 grams) was dissolved in deuterated chloroform and the peak intensity of the repeat unit (2,6-xylenol) was used as the baseline. Intrinsic viscosity (IV) was determined by Ubbelohde viscometer at 25°C in chloroform.

### Comparative Example 1

A sixty-gallon stainless steel reaction vessel was used. The total solids loading was 24.5 weight percent (wt.%). The solids loading and percent solids refers to the weight percent of DMP based on the total weight of DMP and toluene. Approximately 10% of the total monomer dissolved in toluene is added to the reactor at the beginning of the reaction with the remaining solution added to the reactor over the course of 45 minutes. The copper solution was prepared by dissolving Cu₂O (34.08 grams, 0.23 moles copper ion) in a 46 wt.% aqueous solution of hydrobromic acid (207.2 grams, 2.5 moles bromide ion). The DBA loading was 0.965 wt.% based on total monomer (469 grams). The DMBA loading was 1 wt.% based on total monomer (1500.6 grams). The DBEDA loading was 30 wt.% based on the copper ion solution. The DDAC loading was 5 wt.% based on the weight of the copper ion solution. Molecular oxygen was sparged into the reaction mixture via a dip tube at 4,227 standard liters per hour (150 standard cubic feet per hour (SCFH); oxygen and DMP were added to the reaction mixture in a constant mole ratio of 1:1). Throughout the reaction, nitrogen (4,227 standard liters per hour; 150 SCFH) was added to the headspace to reduce the oxygen concentration in the gas phase. The reaction was gradually heated from room temperature (23 °C) during the exothermic stage. During the build stage, the temperature was gradually heated from 23 to 48 °C. Copper ion was chelated with trisodium nitrilotriacetate (NTA) at the end of the build phase, terminating the oxidative polymerization reaction. The reaction mixture was transferred to a jacketed glass vessel and allowed to equilibrate for 120 minutes. The temperature of the mixture during the equilibration phase was 62 °C.

### Example 1

A sixty-gallon stainless steel reaction vessel was used. The total solids loading was 24.5 wt.%. The solids loading and percent solids refers to the weight percent of DMP or PPE based on the total weight of DMP, PPE and toluene. In this example, 5% of the total monomer is replaced with PPE. A 5% PPE solution in toluene and 10% of the total monomer dissolved in toluene is added to the reactor at the beginning of the reaction with the remaining solution added to the reactor over the course of 45 minutes. The copper solution was prepared by dissolving Cu₂O (34.08 grams, 0.23 moles copper ion) in a 46 wt.% aqueous solution of hydrobromic acid (207.2 grams, 2.5 moles bromide ion). The DBA loading was 0.965 wt.% based on total monomer (469 grams). The DMBA loading was 1 wt.% based on total monomer (1500.6 grams). The DBEDA loading was 30 wt.% based on the copper ion solution. The DDAC loading was 5 wt.% based on the weight of the copper ion solution. Molecular oxygen was sparged into the reaction mixture via a dip tube at 4,227 standard liters per hour (150 standard cubic feet per hour (SCFH); oxygen and DMP were added to the reaction mixture in a constant mole ratio of 1:1). Throughout the reaction, nitrogen (4,227 standard liters per hour; 150 SCFH) was added to the headspace to reduce the oxygen concentration in the gas phase. The reaction was gradually heated from room temperature (23 °C) during the exothermic stage. During the build stage, the temperature was increased from 23 to 48 °C. Copper ion was chelated with NTA at the end of the build phase, terminating the oxidative polymerization reaction. The reaction mixture was transferred to a jacketed glass vessel and allowed to equilibrate for 120 minutes. The temperature of the mixture during the equilibration phase was 62 °C.

### Example 2

A sixty-gallon stainless steel reaction vessel was used. The total solids loading was 24.5 wt.%. The solids loading and percent solids refers to the weight percent of DMP or PPE based on the total weight of DMP, PPE and toluene. In this example, 7% of the total monomer is replaced with PPE. A 7% PPE solution in toluene and 10% of the total monomer dissolved in toluene is added to the reactor at the beginning of the reaction with the remaining solution added to the reactor over the course of 45 minutes. Other conditions include temperature profile, catalyst loading, etc. are as described in example 1.

### Example 3

A sixty-gallon stainless steel reaction vessel was used. The total solids loading was 24.5 wt.%. The solids loading and percent solids refers to the weight percent of DMP or PPE based on the total weight of DMP, PPE and toluene. In this example, 10% of the total monomer is replaced with PPE. A 10% PPE solution in toluene and 10% of the total monomer dissolved in toluene is added to the reactor at the beginning of the reaction with the remaining solution added to the reactor over the course of 45 minutes. Other conditions including temperature profile, catalyst loading, etc. are as described in example 1.

For all examples, three liquid samples were collected during the reaction. The first sample was analyzed without further treatment by GPC and NMR spectroscopy. The second sample was equilibrated by heating the sample vial in a water bath maintained at 65 °C for 2 hours. The sample was then devolatilized in a pan prior to further drying in the oven (maintained at 110 °C) overnight. The dried material was subjected to NMR and GPC analysis. During equilibration, the byproduct TMDQ is incorporated into the backbone of the polymer chain thereby increasing the process yield and eliminating any challenges associated with separating the material from the resin. The third sample was equilibrated using similar conditions described above, and subsequently precipitated using methanol as an anti-solvent. The mass ratio of the anti-solvent (methanol) to solvent for precipitation was 3:1. The anti-solvent was maintained at ambient conditions. The precipitated powder was analyzed by GPC, NMR, and IV was determined. By comparing the polydispersity of the sample processed via direct isolation and precipitation, changes in polydispersity when oligomer fines were utilized can be ascertained. Comparison of the results for various oligomer loading in the reactor confirms minimal changes in the polydispersity, suggesting no changes in powder quality and impact on compounding operation.

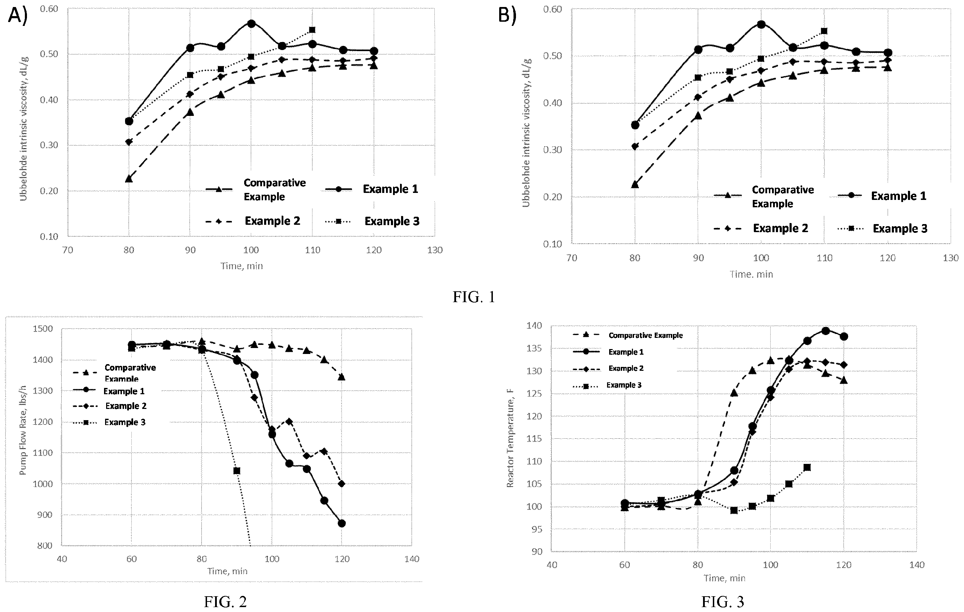

As seen in FIG. 1A, the IV of the polymer increases with time and for a fixed time the measured IV is highest for Example 3, containing the highest percentage of PPE substituted for DMP. The presence of PPE, which a partially polymerized resin in the reactor, explains the difference in the polymerization rate. The closeness in the IV of the samples obtained after equilibration (FIG. 1B) for all the examples suggests that a minimal process modification such as a slight change in catalyst loading or a change in reaction time can be used to tune the process to meet a desired IV.

With increasing polymer intrinsic viscosity, the solution viscosity increases. Solution viscosity can be computed by the Hagen-Poiseuille equation. The circulation pump associated with a reactor is equipped with a variable frequency drive the associated pump controller regulates the solution flow and prevents the motor amperage from exceeding a limit of 5.5 amps. As seen in FIG. 2, Example 3, with 10% PPE loading in the reactor the pump flow rate decreased drastically suggesting increased solution viscosity and near-gel formation. At the measured circulation rate, the solution flow transitioned from laminar flow regime to creep flow, a governing criterion for utilizing the Hagen Poiseuille equation. Further analysis, shown in FIG. 3, suggests that for a given temperature ramp profile, the solution temperature for Example 3 containing 10% PPE is substantially different (i.e., lower compared to other examples).

Analysis of the samples by GPC confirms an increase in molecular weight over time, and it was further observed that there appeared to be no difference in the measured number average molecular weight for each example and catalyst loading. Further, the number average molecular weights of the equilibrated samples were observed to be higher when PPE was introduced into the reactor. For a given catalyst loading (0.23 moles copper ion, 1% solids loading), no difference in rate was observed as the PEP loading in the reactor was increased from 5% to 10%.

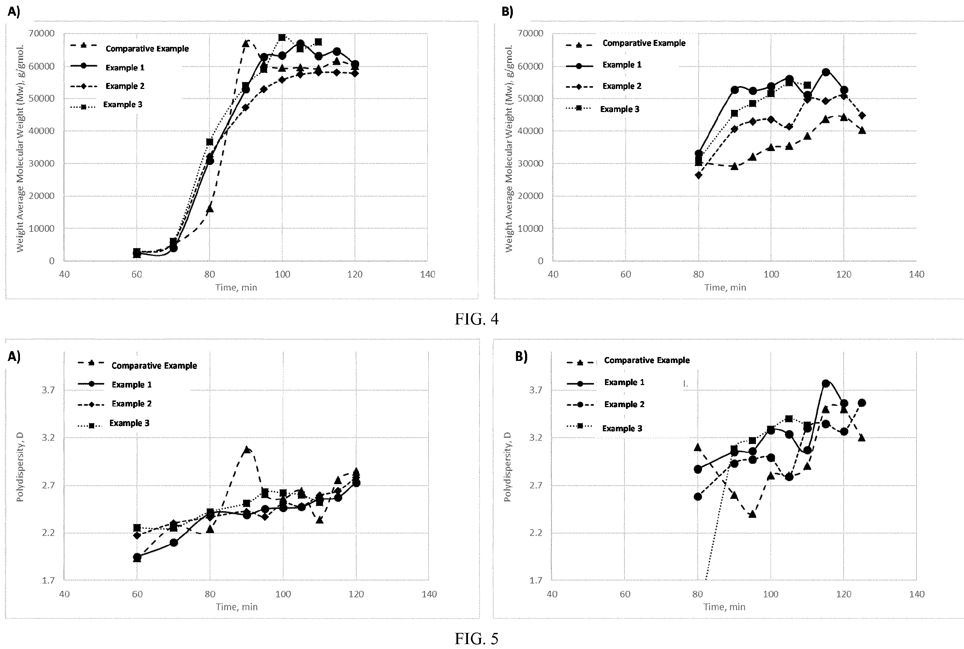

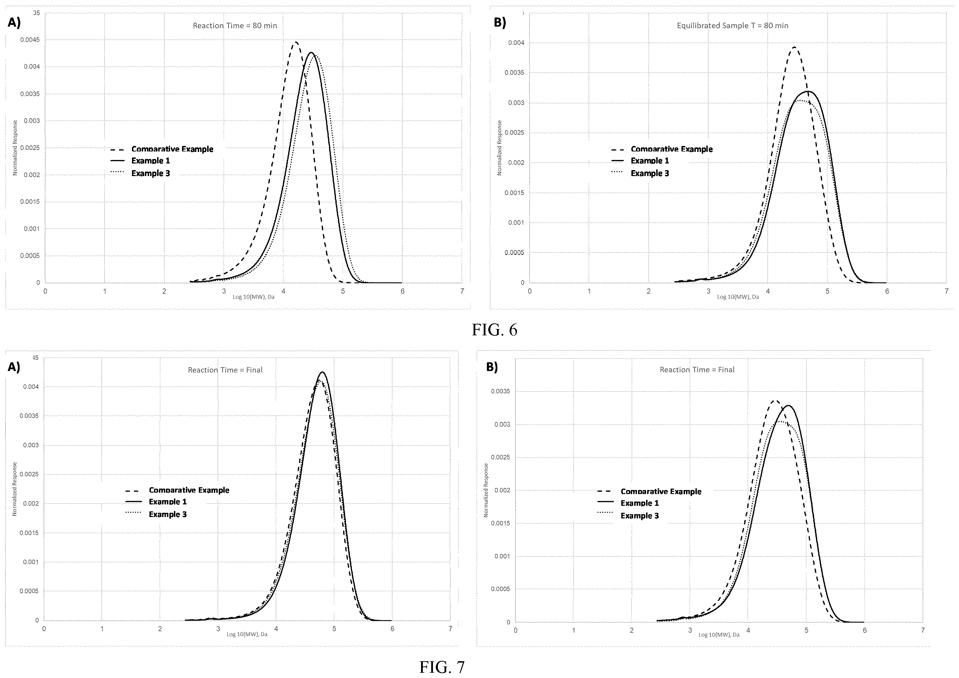

The weight average molecular weight followed a similar trend, as shown in FIG. 4A and 4B, and the presence of PPE in the reactor was not observed to influence the polydispersity of the samples, as shown in FIG. 5A and 5B. The overlay of the GPC chromatograms of the samples, shown in FIGS. 6 to 7 collected during the process provides insights (visually) into the differences in the rates of molecular chain growth. The difference in molecular weight distribution is marginal as the reaction proceeds, suggesting that the presence of PPE at the outset of the polymerization has a minimal impact if the product IV target is high. At early times, the DMP head group concentration (estimated using NMR spectroscopy) is lower for batches containing lower initial PPE loading, and this difference disappears as the reaction proceeds, corroborating minimal impact on the process.

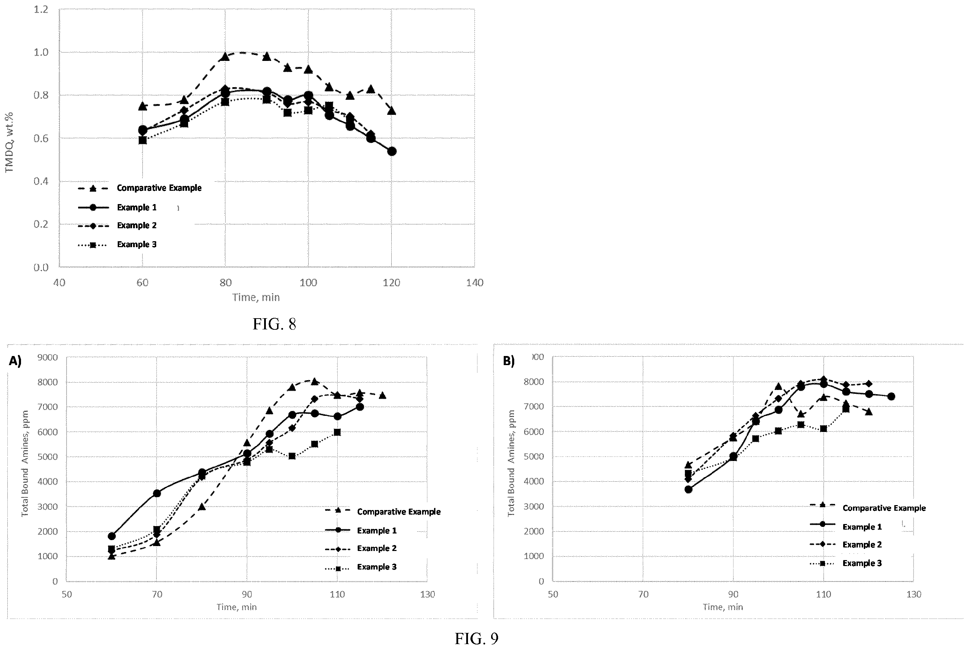

NMR analysis of the liquid samples confirmed the lower selectivity towards the TMDQ (FIG. 8) byproduct. Without wishing to be bound by theory, the partial substitution of the monomer with PPE explains this observation. The PPE resin used in this study contained an undetectable level of external Mannich amine groups (detection limit about 100 ppm). For a specific amine charge, (e.g., DBA loading to the reactor of 1 wt.%) the concentration of total bound amines is similar (FIG. 9) except for the example containing 10% PPE. Amine incorporation occurs during the build phase. In Example 3, the reaction was ended at 110 minutes. The reduced batch time manifests in the form of reduced internal amine group concentration.

Tables 2 and 3 below list the variation in the concentration of external and internal Mannich amine groups, respectively, in the sample collected during the reaction and equilibration phases. Amine concentration is reported in ppm. Typical external and internal Mannich group concentration is 4800-5400 ppm and 1000-1350 ppm, respectively. The calculation to estimate the concentration of amine species include the peak intensities of PPO repeat unit (used as baseline), TMDQ, biphenyl group, etc. Higher chain length (i.e., higher IV) of the samples translates to lower concentration of the amine species as the peak intensity of the PPO repeat unit is baseline for the normalization. As seen in Tables 2 and 3, the concentration of external and internal Mannich amines after equilibration is 4300 ppm and 1500 ppm, respectively. The concentration of cyclic and monobutyl amine species (1500 ppm) and total bound amines (FIG. 9A and 9B) was similar.

**Table 2**

| Time (min) | CE1 | | E1 | | E2 | | E3 | |
|---|---|---|---|---|---|---|---|---|
| | Reaction | Equilibration | Reaction | Equilibration | Reaction | Equilibration | Reaction | Equilibration |
| 60 | 1020.89 | | 1116.2 | | 1221.6 | | 1312.44 | |
| 70 | 1578.9 | | 1739.7 | | 1879.3 | | 2096.59 | |
| 80 | 3019.05 | 4674.68 | 4031.7 | 4681.31 | 4185.56 | 4105.72 | 4230.1 | 4327.59 |
| 90 | 5563.9 | 5768.18 | 4855.5 | 5488.11 | 4877.86 | 5025.27 | 4728.26 | 4957.81 |
| 95 | 6155.11 | 6429.61 | 5091.9 | 5841.82 | 5104.42 | 5357.51 | 4944.38 | 4882 |
| 100 | 6324.91 | 6656.77 | 5173.9 | 5527.04 | 5273.81 | 5520.38 | 4621.34 | 4817.34 |
| 105 | 6152.17 | 5662.71 | 5305.7 | 5304.61 | 5726.88 | 5617.26 | 5007.51 | 5015.25 |
| 110 | 5705.41 | 5027.69 | 5148 | 5241.59 | 5564.03 | 5329.17 | 4999.57 | 4642.11 |
| 115 | 5527.85 | 4664.01 | 4974.6 | 4163.88 | 5354.39 | 5179.49 | | 5420.77 |
| 120 | 5329.09 | 4388.46 | 4746.3 | 4261.5 | | 4830.89 | | |
| 125 | | 4350.9 | | 3887.4 | | | | |

**Table 3**

| Time (min) | CE1 | | E1 | | E2 | | E3 | |
|---|---|---|---|---|---|---|---|---|
| | Reaction | Equilibration | Reaction | Equilibration | Reaction | Equilibration | Reaction | Equilibration |
| 60 | 0 | | 0 | - | 0 | | 0 | |
| 70 | 0 | | 0 | - | 0 | | 0 | |
| 80 | 0 | 0 | 0 | 278.81 | 0 | 0 | 0 | - |
| 90 | 0 | 0 | 0 | 531.74 | 0 | 510.27 | 0 | - |
| 95 | 704.47 | 0 | 536.06 | 875.72 | 465.87 | 783.96 | 351.29 | 0 |
| 100 | 1474.71 | 0 | 1029.35 | 926.34 | 743.44 | 1105.08 | 404.37 | 0 |
| 105 | 1890.66 | 0 | 1211.95 | 995.32 | 1223.65 | 1443.06 | 496.47 | 417.98 |
| 110 | 1772.91 | 1409.7 | 1459.76 | 1316.44 | 1456.59 | 1731.97 | 902.99 | 711.25 |
| 115 | 2045.71 | 1438.75 | 1525 | 1592.46 | 1446.22 | 1617.64 | | 603.75 |
| 120 | 2147.54 | 1368.61 | 1365.99 | 1701.13 | | 1829.56 | | 704.57 |
| 125 | | 1510.67 | | 1734.04 | | | | 911.46 |

The phenylene ether oligomer starting material can include between 20 and 50 weight percent moisture, based on the weight of the oligomer. It would be further advantageous for the method of the present disclosure to utilize the phenylene ether oligomer despite the presence of moisture, and without further drying the material prior to the oxidative polymerization. Amount of water introduced into the reaction when phenylene ether oligomer starting material with varying moisture content is used is summarized in Table 4.

**Table 4**

| Extra water introduced to the process, pounds (times excess) | | Moisture content in phenylene ether oligomer (wt%) | | | | |
|---|---|---|---|---|---|---|
| | | 30 | 25 | 20 | 15 | 10 |
| Phenylene ether oligomer content (total reactor solids is 25%) | 1 | 3.17 (1.44X) | 2.64 (1.37X) | 2.1 (1.29X) | 1.58 (1.22X) | 1.05 (1.15X) |
| | 2 | 6.35 (1.88X) | 5.29 (1.74X) | 4.23 (1.58X) | 3.17 (1.44X) | 2.11 (1.29X) |
| | 3 | 9.53 (2.33X) | 7.94 (2.11X) | 6.35 (1.88X) | 4.76 (1.66X) | 3.17 (1.44X) |
| | 4 | 12.71 (2.77X) | 10.59 (2.47X) | 8.47 (2.18X) | 6.35 (1.88X) | 4.23 (1.59X) |
| | 5 | 15.89 (3.21X) | 13.24 (2.84X) | 10.59 (2.47X) | 7.94 (2.11X) | 5.29 (1.74X) |

As can be seen from Table 4, introduction of 1 to 5 weight percent of the phenylene ether oligomer containing 30% water into the reaction can introduce 3.1 to 15.8 pounds of additional moisture to the process, which is approximately 1.44 to 3.21 times the amount of moisture normally found in the reactor during a process which uses only phenolic monomer starting materials. For reference, approximately 7.18 gallons of water is present in the reactor at the beginning of a process when no wet phenylene ether oligomer is added. Of this, approximately 4 gallons is associated with the catalyst package, and the rest with the organic solvent (e.g., about 0.1 wt% moisture in the solvent). Theoretical calculations suggest that about 157 gallons of water are formed during the polymerization. In one example, substituting 1% of monomer with wet phenylene ether oligomer will result in the introduction of 3.17 pounds of extra moisture in the reactor, translating to an excess moisture content of ∼1.44X. The possibility of catalyst deactivation due to the presence of excess moisture associated with the wet phenylene ether oligomer (when used in an amount of 0.5-10 wt.%) charged to the reactor is minimal. Accordingly, the present inventor has further surprisingly found that the present process can utilize wet phenylene ether oligomer with no significant adverse effects.

This disclosure further encompasses the following aspects.
Aspect 1: A method of making a poly(phenylene ether), the method comprising: oxidatively polymerizing a combination comprising, based on the total weight of the combination, 90 to 99.5 weight percent of a phenolic monomer; and 0.5 to 10 weight percent of a monofunctional phenylene ether oligomer having an intrinsic viscosity of less than 0.2 deciliters per gram, preferably 0.10 to 0.15 deciliters per gram, more preferably 0.12 to 0.13 deciliters per gram, determined at 25°C in chloroform by Ubbelohde viscometer; in the presence of an organic solvent and a copper-amine catalyst; terminating the oxidative polymerization to form a post-termination reaction mixture; combining an aqueous solution comprising a chelant with the post-termination reaction mixture to form a chelation mixture comprising an aqueous phase comprising chelated copper ion, and an organic phase comprising dissolved poly(phenylene ether); separating the aqueous phase and the organic phase; and isolating the poly(phenylene ether) from the organic phase.
Aspect 2: The method of aspect 1, wherein the oxidative polymerization comprises initiating oxidative polymerization in the presence of the monofunctional phenylene ether oligomer and no more than 10 weight percent of the phenolic monomer, wherein the remainder of the phenolic monomer is added to the mixture after initiation, preferably over the course of at least 40 minutes.
Aspect 3: The method of aspect 1 or 2, wherein the phenolic monomer comprises 2,6-dimethylphenol.
Aspect 4: The method of any of aspects 1 to 3, wherein the organic solvent comprises toluene, benzene, chlorobenzene, or a combination thereof.
Aspect 5: The method of any of aspects 1 to 4, wherein the copper-amine catalyst comprises a copper ion and a hindered secondary amine, preferably wherein the hindered secondary amine has the formula R_{b}HN-Rₐ-NHR_{c}, wherein Rₐ is C₂₋₄ alkylene or C₃₋₇ cycloalkylene and R_{b} and R_{c} are isopropyl or C₄₋₈ tertiary alkyl wherein only the α-carbon atom has no hydrogens, there being at least two and no more than three carbon atoms separating the two nitrogen atoms, more preferably wherein the hindered secondary amine is di*-tert-*butylethylenediamine.
Aspect 6: The method of aspect 5, wherein the oxidative polymerization is further in the presence of a secondary monoamine, a tertiary monoamine, or a combination thereof, preferably wherein the secondary monoamine comprises di-*n*-butylamine and the tertiary monoamine comprises *N,N-*dimethylbutylamine.
Aspect 7: The method of any of aspects 1 to 6, wherein the oxidative polymerization is further in the presence of a bromide ion.
Aspect 8: The method of any of aspects 1 to 7, wherein the oxidative polymerization is further in the presence of a phase transfer agent, preferably wherein the phase transfer agent comprises a quaternary ammonium compound, a quaternary phosphonium compound, a tertiary sulfonium compound, or a combination thereof, more preferably wherein the phase transfer agent comprises *N,N,N'N*'-didecyldimethyl ammonium chloride.
Aspect 9: The method of any of aspects 1 to 8, wherein the chelant comprises an alkali metal salt of an aminopolycarboxylic acid, preferably an alkali metal salt of an aminoacetic acid, more preferably an alkali metal salt of nitrilotriacetic acid, ethylene diamine tetraacetic acid, or a combination thereof, even more preferably a sodium salt of nitrilotriacetic, a sodium salt of ethylene diamine tetraacetic acid, or a combination thereof.
Aspect 10: The method of any of aspects 1 to 9, wherein the oxidative polymerization is at a temperature of 20 to 70°C, preferably 30 to 60°C, more preferably 45 to 55°C.
Aspect 11: The method of any of aspects 1 to 10, wherein the poly(phenylene ether) has an intrinsic viscosity of greater than 0.20 deciliter per gram, preferably 0.25 to 0.60 deciliter per gram, or 0.3 to 0.6 deciliter per gram, or 0.4 to 0.6 deciliter per gram, determined at 25°C in chloroform by Ubbelohde viscometer.
Aspect 12: The method of any of aspects 1 to 11, wherein the phenylene ether oligomer comprises less than 100 parts per million of incorporated amine groups.
Aspect 13: The method of any of aspects 1 to 12, wherein the phenylene ether oligomer further comprises 20 to 50 weight percent water, based on the total weight of the phenylene ether oligomer and the water.
Aspect 14: A poly(phenylene ether) made by the method of any of aspects 1 to 13.
Aspect 15: An article comprising the poly(phenylene ether) of aspect 14.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "some aspects," "an aspect," and so forth, means that a particular element described in connection with the aspect is included in at least one aspect described herein, and may or may not be present in other aspects. The term "combination thereof' as used herein includes one or more of the listed elements, and is open, allowing the presence of one or more like elements not named. In addition, it is to be understood that the described elements may be combined in any suitable manner in the various aspects.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl," whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl), a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example - CH₂CH₂CN is a C₂ alkyl group substituted with a nitrile.

While particular aspects have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A method of making a poly(phenylene ether), the method comprising:
oxidatively polymerizing a combination comprising, based on the total weight of the combination,
90 to 99.5 weight percent of a phenolic monomer; and
0.5 to 10 weight percent of a monofunctional phenylene ether oligomer having an intrinsic viscosity of less than 0.2 deciliters per gram, preferably 0.10 to 0.15 deciliters per gram, more preferably 0.12 to 0.13 deciliters per gram, determined at 25°C in chloroform by Ubbelohde viscometer;
in the presence of an organic solvent and a copper-amine catalyst;
terminating the oxidative polymerization to form a post-termination reaction mixture;
combining an aqueous solution comprising a chelant with the post-termination reaction mixture to form a chelation mixture comprising
an aqueous phase comprising chelated copper ion, and
an organic phase comprising dissolved poly(phenylene ether);
separating the aqueous phase and the organic phase; and
isolating the poly(phenylene ether) from the organic phase.

2. The method of claim 1, wherein the oxidative polymerization comprises initiating oxidative polymerization in the presence of the monofunctional phenylene ether oligomer and no more than 10 weight percent of the phenolic monomer, wherein the remainder of the phenolic monomer is added to the mixture after initiation, preferably over the course of at least 40 minutes.

3. The method of claim 1 or 2, wherein the phenolic monomer comprises 2,6-dimethylphenol.

4. The method of any of claims 1 to 3, wherein the organic solvent comprises toluene, benzene, chlorobenzene, or a combination thereof.

5. The method of any of claims 1 to 4, wherein the copper-amine catalyst comprises a copper ion and a hindered secondary amine,
preferably wherein the hindered secondary amine has the formula
R_{b}HN-Rₐ-NHR_{c},
wherein Rₐ is C₂₋₄ alkylene or C₃₋₇ cycloalkylene and R_{b} and R_{c} are isopropyl or C₄₋₈ tertiary alkyl wherein only the α-carbon atom has no hydrogens, there being at least two and no more than three carbon atoms separating the two nitrogen atoms,
more preferably wherein the hindered secondary amine is di-*tert*-butylethylenediamine.

6. The method of claim 5, wherein the oxidative polymerization is further in the presence of a secondary monoamine, a tertiary monoamine, or a combination thereof, preferably wherein the secondary monoamine comprises di-*n*-butylamine and the tertiary monoamine comprises *N,N-*dimethylbutylamine.

7. The method of any of claims 1 to 6, wherein the oxidative polymerization is further in the presence of a bromide ion.

8. The method of any of claims 1 to 7, wherein the oxidative polymerization is further in the presence of a phase transfer agent, preferably wherein the phase transfer agent comprises a quaternary ammonium compound, a quaternary phosphonium compound, a tertiary sulfonium compound, or a combination thereof, more preferably wherein the phase transfer agent comprises *N,N,N'N*'-didecyldimethyl ammonium chloride.

9. The method of any of claims 1 to 8, wherein the chelant comprises an alkali metal salt of an aminopolycarboxylic acid, preferably an alkali metal salt of an aminoacetic acid, more preferably an alkali metal salt of nitrilotriacetic acid, ethylene diamine tetraacetic acid, or a combination thereof, even more preferably a sodium salt of nitrilotriacetic, a sodium salt of ethylene diamine tetraacetic acid, or a combination thereof.

10. The method of any of claims 1 to 9, wherein the oxidative polymerization is at a temperature of 20 to 70°C, preferably 30 to 60°C, more preferably 45 to 55°C.

11. The method of any of claims 1 to 10, wherein the poly(phenylene ether) has an intrinsic viscosity of greater than 0.20 deciliter per gram, preferably 0.25 to 0.60 deciliter per gram, or 0.3 to 0.6 deciliter per gram, or 0.4 to 0.6 deciliter per gram, determined at 25°C in chloroform by Ubbelohde viscometer.

12. The method of any of claims 1 to 11, wherein the phenylene ether oligomer comprises less than 100 parts per million of incorporated amine groups.

13. The method of any of claims 1 to 12, wherein the phenylene ether oligomer further comprises 20 to 50 weight percent water, based on the total weight of the phenylene ether oligomer and the water.

14. A poly(phenylene ether) made by the method of any of claims 1 to 13.

15. An article comprising the poly(phenylene ether) of claim 14.
